# EUROPÄISCHE PATENTSCHRIFT

(11) **EP 3 290 266 B1**
(45) Veröffentlichungstag und Bekanntmachung des Hinweises auf die Patenterteilung: **07.10.2020**
(21) Anmeldenummer: 17186325.1
(22) Anmeldetag: 15.08.2017
(51) Int. Cl.: B60P 1/43

(54) **VERLADEKLAPPENVORRICHTUNG FÜR TIERTRANSPORTFAHRZEUGE**
TAILBOARD DEVICE FOR ANIMAL TRANSPORT VEHICLES
DISPOSITIF DE TRAPPES DE CHARGEMENT POUR VÉHICULES DESTINÉ AU TRANSPORT D'ANIMAUX

(30) Priorität: 15.08.2016 DE 102016115081
(43) Veröffentlichungstag der Anmeldung: 07.03.2018
(73) Patentinhaber: Schnurbusch, Michael, 46537 Dinslaken (DE); Schnurbusch, Anna, 46569 Hünxe (DE)
(72) Erfinder: Schnurbusch, Michael, 46537 Dinslaken (DE); Schnurbusch, Anna, 46569 Hünxe (DE)
(74) Vertreter: Heitzer, Christian Michael

(56) Entgegenhaltungen:
- DE-A1- 19 539 430
- DE-U1-202007 016 292
- US-A- 4 727 612
- US-A1- 2007 237 615
- US-B1- 6 293 748

## Beschreibung

### Technisches Gebiet

Die Erfindung betrifft eine Verladeklappenvorrichtung für ein Tiertransportfahrzeug-, insbesondere ein Pferdetransportfahrzeug oder einen Pferdetransportanhänger, gemäß den Merkmalen im Oberbegriff des unabhängigen Patentanspruchs 1.

### Stand der Technik

Zum Transport von Tieren, insbesondere von Pferden, werden Pferdetransportfahrzeuge oder Pferdetransportanhänger verwendet. Die Tiere steigen in der Regel von hinten mit dem Kopf nach vorne gerichtet über eine Verladeklappe wie eine Lauframpe bzw. Heckklappe ein. Während des Transports verweilen die Tiere auf einer Ladefläche stehend oder liegend in dieser Richtung. Die Platzverhältnisse des Laderaums über der Ladefläche sind in der Regel so, dass sich die Tiere nicht umdrehen können. Dies wäre auch schon deshalb nicht erwünscht, weil die Tiere den Transport mit dem Kopf voraus in Fahrtrichtung orientiert auf der Transportfläche verweilen sollen. Nach dem Transport verlassen die Tiere die Transportfläche rückwärts laufend über die Verladeklappe. Die Verladeklappe kann zwischen einer im Wesentlichen senkrechten Transportstellung zum Verschließen einer Verladeöffnung und einer herabgeklappten Verladestellung geschwenkt werden.

Beim Transport befindet sich die Verladeklappe in der Transportstellung, d.h. sie ist hochgeklappt und befindet sich in einer oberen Position, wodurch der Laderaum verschlossen wird und die Verladeklappe die Rückwand des Tiertransporters bildet. Die Verladeklappe ist in der Regel mit wenigstens einer oder mit zwei Bodenstützen versehen, auf welchen die Verladeklappe im herabgeklappten Zustand auf einem Untergrund aufsteht. Damit die Verladeklappe auch bei unebenem Untergrund sicher in einer stabilen unteren Position gehalten wird, verbleibt in der herabgeklappten Verladestellung ein Abstand bzw. Spalt zwischen der Verladeklappe und dem Untergrund. Sofern Bodenstützen vorhanden sind, wird der Abstand bzw. Spalt von deren Höhe bestimmt. Alternativ wird die Verladeklappe durch andere Begrenzungsmittel als die Bodenstütze auf Abstand zum Untergrund gehalten. Damit soll sichergestellt werden, dass die Verladeklappe eine definierte untere Position einnimmt. Auch wenn die Verladeklappe in der unteren Position entlang der hinteren Außenkante der Verladeklappe auf dem Untergrund aufsteht, ohne dass ein wesentlicher Abstand entlang der hinteren Außenkante der Verladeklappe zwischen der Verladeklappe und dem Untergrund besteht, können in dieser Position zwischen den seitlichen Außenkanten der Verladeklappe und dem Untergrund keilförmige Abstände verbleiben. Weiterhin sind Ausführungsformen von Tiertransportfahrzeugen bekannt, bei denen in der herabgeklappten Verladestellung ein Abstand zwischen Verladeklappe zum Untergrund vorhanden ist.

Nachteilig bei diesen Verladeklappen für Tiertransportfahrzeuge- ist also, dass diese herabgeklappt immer noch einen hinteren Abstand bzw. Spalt zum Untergrund bzw. Boden von ca. 10 cm und seitlich keilförmige Abstände aufweisen. Wenn ein Reit-, Last- oder Nutztier rückwärts aus dem Transporter geführt wird, besteht die Gefahr, dass das Reit-, Last- oder Nutztier über eine Kante stolpert und sich erheblich verletzt. Insbesondere bei teuren Turnierpferden ist dies ein besonderes Risiko. Selbst wenn sich das Reit-, Last- oder Nutztier bei einem Stolpern über die Kante nicht verletzen sollte, kann durch dieses negative Ereignis ein Trauma ausgelöst werden, wodurch sich das Pferd in Zukunft weigern könnte, aus dem Transportfahrzeug zu gehen. Reit-, Last- oder Nutztier müssen transportiert werden, um beispielsweise zu auswärtigen Turnieren, einem anderen Stall oder zum Tierarzt zu gelangen.

DE 20 2007 016 292 U1 beschreibt eine Verlängerung einer Verladerampe an der hinteren Außenkante einer Verladeklappe. Das Dokument wird als nächstliegender Stand der Technik angesehen und offenbart den Oberbegriff des Anspruchs 1. Aus der DE 195 39 430 A1 sind Verlängerungsstücke, die jeweils ausschließlich seitlich an der Verladerampe anbringbar sind, bekannt. Aus der US 6,293,748 B1 betrifft eine verstaubare Rampenvorrichtung zum Einsatz in Transportfahrzeugen.

Es ist deshalb Aufgabe der Erfindung, eine Verladeklappenvorrichtung für Tiertransportfahrzeuge, insbesondere zum Transport von Reit-, Last- oder Nutztieren, bereitzustellen, bei der das genannte Sicherheitsproblem vermieden wird indem die Formschlüssigkeit zwischen der Verladeklappe und dem Untergrund insbesondere bei unebenem Untergrund hergestellt wird und dadurch zusätzliche Spalte überbrückt werden, womit sich die Tiere auch ohne Verletzungsgefahr rückwärts aus dem Laderaum des Transporters zurück auf den Untergrund bewegen können.

### Zusammenfassung der Erfindung

Die vorliegende Erfindung löst diese Aufgabe durch eine Verladeklappenvorrichtung für Tiertransportfahrzeuge gemäß den Merkmalen des unabhängigen Patentanspruchs 1. Weitere bevorzugte Ausführungsformen der vorliegenden Erfindung finden sich in den abhängigen Patentansprüchen.

Die erfindungsgemäße Verladeklappenvorrichtung für ein Transportfahrzeug umfasst eine Verladeklappe, die zwischen einer im Wesentlichen senkrechten Transportstellung und einer herabgeklappten Verladestellung verschwenkbar ausgebildet ist. Die Verladeklappe weist in der herabgeklappten Verladestellung wenigstens an einer Stelle entlang einer die Verladeklappe umlaufenden Außenkante einen Abstand zum Untergrund auf. Es ist wenigstens eine Verlängerungseinrichtung vorgesehen, welche über wenigstens ein Verbindungsmittel derart an der Verladeklappe anordenbar ist, dass die Verlängerungseinrichtung in der herabgeklappten Verladestellung die Verladeklappe den Raum zwischen der Verladeklappe und dem Untergrund an wenigstens einer Stelle überbrückt.

Erfindungsgemäß wird der Abstand zum Untergrund durch wenigstens eine Verlängerungseinrichtung, erfindungsgemäß wenigstens ein Brückenstück, überbrückt. Die Verlängerungseinrichtung ist vorteilhaft so ausgestaltet, dass sie eventuelle Unebenheiten des Untergrunds ausgleicht und auf diese Weise die Verladeklappe verlängert und formschlüssig den Spalt zwischen Verladeklappe und Untergrund überbrückt.

Erfindungsgemäß umfasst die Verlängerungseinrichtung wenigstens ein Brückenstück.

In einer vorteilhaften Ausführungsform ist wenigstens ein Brückenstück über ein Verbindungsmittel, beispielsweise über ein mechanisches Scharnier, ein dauerelastisches Material wie Leder, Gummi oder dergleichen, beweglich an einer Außenkante der Verladeklappe angeordnet und kann bei Bedarf ein- und ausgeklappt werden. Die Außenkante der Verladeklappe ist vorzugsweise die hintere Kante der Verladeklappe. In besonderen Fällen ist es auch von Vorteil alternativ oder zusätzlich an den Seitenkanten der Verladeklappe Brückenstücke anzubringen, welche den Abstand zwischen Verladeklappe und Untergrund formschlüssig überbrücken. Vorteilhaft sind Befestigungsmittel wie Schrauben, Bolzen, Klammern oder dergleichen vorgesehen, um das mechanische Scharnier oder das dauerelastisches Material des Brückenstücks temporär oder dauerhaft zu befestigen, beispielsweise um bestehende Verladeklappen mit derartigen Brückenstücken nachzurüsten.

Vorteilhaft ist bei dieser Ausführungsform die Oberseite des Brückenstücks, die gemeinsam mit der Unterseite eine Nut bildet gleich tief wie die Unterseite und umfasst 1cm bis 4 cm, vorzugsweise 2cm bis-3 cm.

Durch die Schwenkeinrichtung kann das Brückenstück bei hochgeklappter Verladeklappe nach innen geklappt werden. Dadurch bleibt die hintere Öffnung des Tiertransporters bei hochgeklappter Verladeklappe in seiner Höhe unverändert und die Lüftungsöffnung bleibt unverändert.

In einer weiteren Ausführungsform ist wenigstens ein Brückenstück über Verbindungsmittel aufgesteckbar auf einer Außenkante der Verladeklappe anordenbar und kann entfernt werden, wenn kein Bedarf besteht. Außenkante der Verladeklappe ist vorzugsweise die hintere Kante der Verladeklappe.

Das Brückenstück kann bei dieser Ausführungsform alternativ fest mit der Verladeklappe verbindbar ausgeführt sein.

Vorteilhaft weist ein Brückenstück bei dieser Ausführungsform an der Verbindungsseite eine Nut auf, mit der es auf die Außenkante der Verladeklappe geschoben wird. Vorteilhaft sind Befestigungsmittel wie Schrauben, Bolzen, Klammern oder dergleichen vorgesehen um die Verbindung des Brückenstücks mit der Verladeklappe temporär zu sichern oder auch um es dauerhaft an der Verladeklappe zu befestigen, beispielsweise um bestehende Verladeklappen nachzurüsten.

Vorteilhaft weist die Nut eine Breite von maximal 2,5 cm, vorzugsweise 1,8c m bis 2,2 cm auf, damit das Brückenstück auf die gängigsten Verladeklappen passt. Ein formschlüssiger Übergang vom Brückenstück auf die Außenkante der Verladeklappe ist dabei nicht erforderlich, da die Sicherung des Brückenstücks von oben erfolgt und die kurzzeitige vertikale Belastung beim Auftreten durch das Tier keine überlastenden Kraftkomponenten auf die Verbindung zwischen Verladeklappe und Brückenstück erzeugt.

In einer weiteren vorteilhaften Ausführungsform ist die Oberseite des Brückenstücks, welche zusammen mit der Unterseite eine Nut bildet, länger als die Unterseite, d.h. die Oberseite der Nut greift weiter über die Außenkante der Verladeklappe als die Unterseite darunter.

In einer weiteren Ausführungsform ist das Brückenstück kürzer ausgeführt und umfasst eine Tiefe T von 20 cm bis 30 cm, vorzugsweise 25 cm bis 26 cm, und ist wie die vorgenannten Ausführungsbeispiele an der Verladeklappe anbringbar. In diesem Ausführungsbeispiel wird der Abstand zum Untergrund bzw. Boden in einem deutlich steileren Winkel überbrückt als in den vorgenannten Ausführungsbeispielen.

Bedarfsweise kann optional in den genannten Ausführungsbeispielen ein Adapter zwischen Brückenstück und Außenkante der Verladeklappe angebracht werden, beispielsweise um einen Unterschied zwischen der Nut des Brückenstücks oder der Materialstärke des Brückenstücks und der Materialstärke der Verladeklappe auszugleichen.

Weiterhin ist auch in diesem Ausführungsbeispiel von Vorteil alternativ oder zusätzlich an den Seitenkanten der Verladeklappe Brückenstücke gemäß dieser Ausführungsform anzubringen, welche den Abstand zwischen Verladeklappe und Untergrund formschlüssig überbrücken.

Das Brückenstück umfasst jeweils mehrere Einzelelemente, welche einem gemeinsamen Verbindungsmittel zugeordnet sind und die sich je nach Abstand zwischen Verladeklappenkante und Untergrund unterschiedlich ausrichten können. Damit wird eine zusätzliche Verbesserung der formschlüssigen Überbrückung erreicht.

Vorteilhaft erstreckt sich ein oder erstrecken sich mehrere Brückenstücke über die gesamte Breite der hinteren Außenkante der Verladeklappe. Die Tiefe T eines hinteren Brückenstücks beträgt in einer bevorzugten Ausführungsform maximal 40 cm, bevorzugt 30 cm bis 35 cm.

Vorteilhaft erstreckt sich in einer weiteren Ausführungsform wenigstens ein seitliches Brückenstück über einen Teil oder über die gesamte Länge der seitlichen Außenkanten der Verladeklappe.

Vorteilhaft weisen die Brückenstücke an wenigstens einer Seite elastische Überstände oder Materiallippen auf, um die Formschlüssigkeit zwischen Verladeklappe und Untergrund und/oder zwischen den Einzelelementen und/oder zwischen Brückenstück und Verladeklappe weiter zu verbessern und dadurch zusätzliche Spalte zu überbrücken.

Ein Brückenstück umfasst beispielsweise festes Material wie Holz oder Metall oder umfasst teilelastisches Material wie Kunststoff, faserverstärkten Kunststoff, Gummi oder Hartgummi. Das Brückenstück umfasst entweder Vollmaterial oder einen Profilkörper, vorzugsweise ein Strangpressprofil beispielsweise aus Leichtmetall oder um Material zu sparen dünnere Flächen als beim Vollmaterial oder Hohlräume, beispielsweise in Wabenform, welche an den Stellen, an denen hohe mechanische Belastungen auftreten, durch Rippen verstärkt sind. Teilelastisches Material weist den Vorteil auf, dass sich ein Brückenstück im elastischen Bereich an Unebenheiten des Untergrunds anpasst und dabei gleichzeitig die für eine wirksame Überbrückung erforderliche Festigkeit bereitstellt. Vorteilhaft ist auch eine Kombination in Form eines Verbunds von festem Material in Bereichen eines Brückenstücks mit besonders hoher Belastung oder mit besonderen Anforderungen an die Fertigungsgenauigkeit und elastischem oder teilelastischem Material in Bereichen eines Brückenstücks mit besonderen Anforderungen an eine möglichst formschlüssige Anpassung an den Untergrund.

Vorteilhaft ist die Oberseite mit einem rauen Profil und/oder mit einem rutschfesten Belag versehen, damit das Tier nicht mit den Hufen abrutschen kann. Dieser kann beispielsweise eine rutschfeste Gummierung umfassen. Vorteilhaft weist die rutschfeste Oberfläche die gleiche oder eine ähnliche Beschaffenheit in Profil und Material auf wie die Oberfläche der Verladeklappe.

Die Erfindung ermöglicht so einerseits eine stabile Position der Verladeklappe relativ zum Untergrund und schließt über wenigstens ein erfindungsgemäßes Brückenstück weitgehend formschlüssig den Spalt zwischen Verladeklappe und Untergrund. Dadurch wird die Verletzungsgefahr der Tiere, welche sich über die Verladeklappe bewegen, erheblich gesenkt.

### Kurze Beschreibung der begleitenden Figuren

Fig. 1 zeigt einen hinteren Teil eines Tiertransportfahrzeuges in der Seitenansicht mit einer Verladeklappe in einer im Wesentlichen senkrechten Transportstellung bzw. in einer oberen Position.
Fig. 2a zeigt einen hinteren Teil eines Tiertransportfahrzeuges in der Seitenansicht mit einer Verladeklappe in einer herabgeklappten Verladestellung bzw. in einer unteren Position.
Fig. 2b zeigt ein Tiertransportfahrzeug in der Rückansicht mit einer Verladeklappe in der herabgeklappten Verladestellung bzw. in der unteren Position.
Fig. 3 zeigt beispielhaft die Detailansicht A einer aufsteckbaren Verlängerungseinrichtung bzw. eines aufsteckbaren Brückenstücks in der Seitenansicht.
Fig. 3a zeigt beispielhaft die Detailansicht A einer aufsteckbaren Verlängerungseinrichtung bzw. eines aufsteckbaren Brückenstücks umfassend einen Profilkörper in der Seitenansicht.
Fig. 4 zeigt beispielhaft die Detailansicht A einer schwenkbaren Verlängerungseinrichtung bzw. eines schwenkbaren Brückenstücks in der Seitenansicht.
Fig. 4a zeigt beispielhaft die Detailansicht A einer schwenkbaren Verlängerungseinrichtung bzw. eines schwenkbaren Brückenstücks umfassend einen Profilkörper in der Seitenansicht.
Fig. 5 zeigt beispielhaft die Draufsicht auf die Verladeklappe aus der Detailansicht B mit mehreren Brückenstücken an der hinteren Außenkante der Verladeklappe
Fig. 6 zeigt beispielhaft die Draufsicht auf die Verladeklappe aus der Detailansicht B mit einer Verlängerungseinrichtung bzw. einem Brückenstück an der hinteren Außenkante der Verladeklappe und mehreren Verlängerungseinrichtungen bzw. mehreren Brückenstücken an den seitlichen Außenkanten der Verladeklappe.

### Detaillierte Beschreibung bevorzugter Ausführungsbeispiele

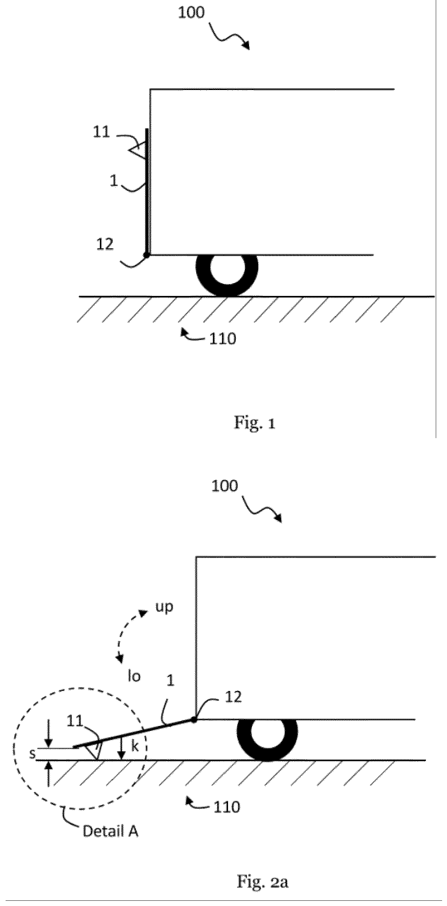

Fig. 1 zeigt ein Tiertransportfahrzeug 100 in der Seitenansicht mit einer Verladeklappe 1 in einer im Wesentlichen senkrechten Transportstellung bzw. in einer oberen Position up. Die Verladeklappe 1 ist dabei um eine Schwenkeinrichtung 12 nach oben geklappt und bildet in dieser im Wesentlichen senkrechten Transportstellung up die Rückwand des Tiertransportfahrzeuges 100, die die den Laderaum 101 nach hinten begrenzt.

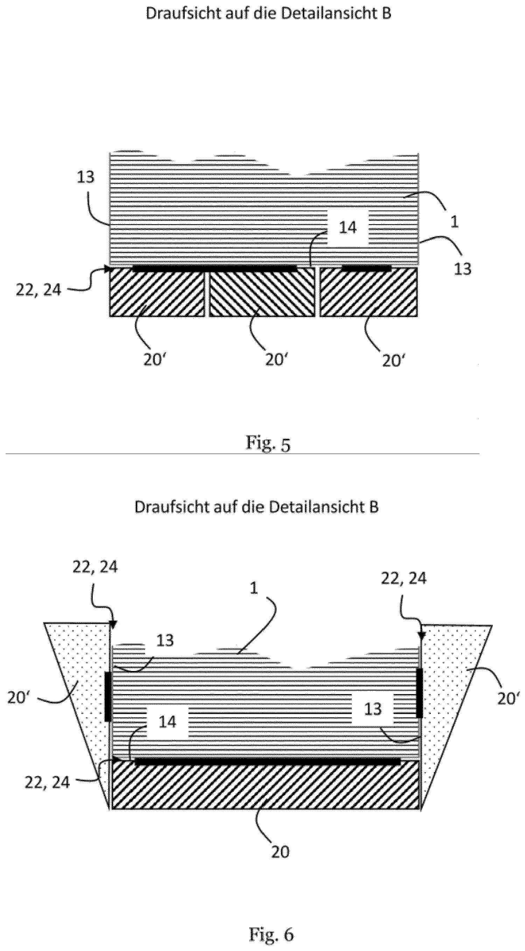

Fig. 2a zeigt ein Tiertransportfahrzeug 100 in der Seitenansicht mit einer Verladeklappe 1 in einer herabgeklappten Verladestellung bzw. einer unteren Position lo. Die Verladeklappe 1 ist in diesem Beispiel so weit nach unten geklappt, bis sie über eine Bodenstütze 11 auf dem Untergrund 110 aufsteht und die hintere Außenkante 14 (vgl. Fig. 5 und Fig. 6) der Verladeklappe den Abstand s zum Untergrund bzw. Boden 110 einnimmt.

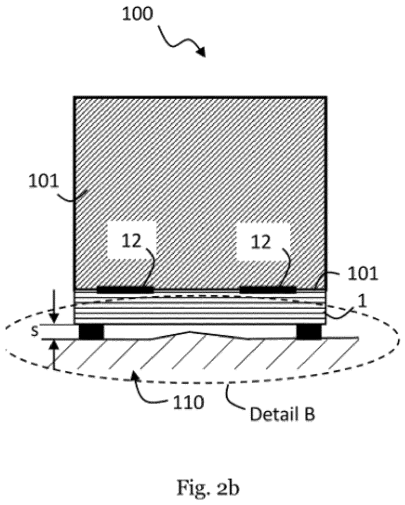

Fig. 2b zeigt ein Tiertransportfahrzeug 100 in der Rückansicht mit einer Verladeklappe 1 in einer herabgeklappten Verladestellung bzw. in einer unteren Position lo. Die Verladeklappe 1 ist in diesem Beispiel so weit nach unten geklappt, bis sie durch ein Begrenzungselement im Abstand s über dem Untergrund 110 gehalten wird. Ein Begrenzungselement umfasst in diesem Fall beispielsweise einen Bügel (nicht dargestellt) zum Einhängen oder eine hydraulische Vorrichtung (nicht dargestellt) zum Bewegen der Verladeklappe 1 oder eine Bodenstütze 11 wie in Fig. 2a dargestellt.

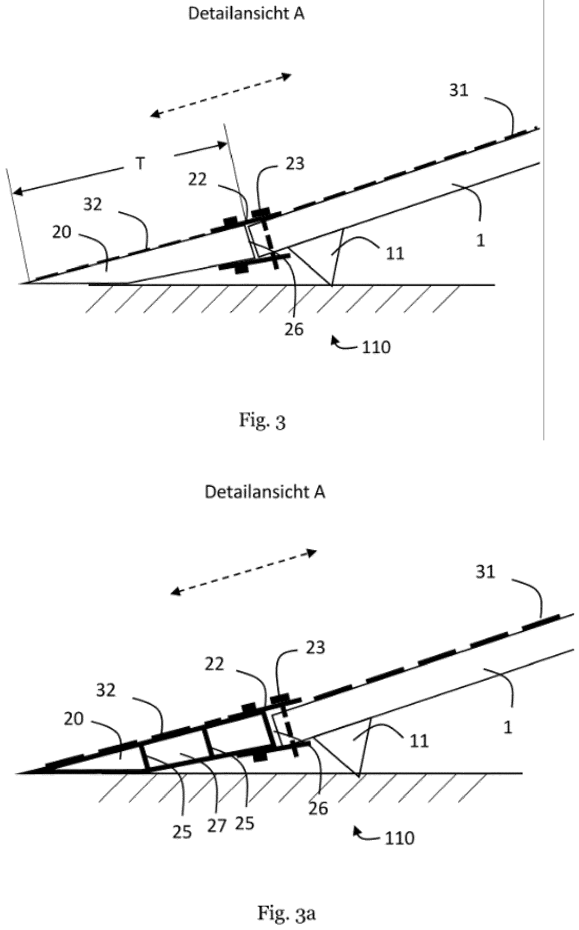

Fig. 3 zeigt beispielhaft die Detailansicht A einer aufsteckbaren Verlängerungseinrichtung bzw. eines aufsteckbaren Brückenstücks 20 in der Seitenansicht. In dieser Ausführungsform ist wenigstens ein Brückenstück 20 über ein steckbares Verbindungsmittel 22 aufsteckbar auf einer Außenkante 13, 14 (vgl. Fig. 6 und Fig. 6) der Verladeklappe 1 temporär anordenbar und kann entfernt werden, wenn kein Bedarf besteht. Die Außenkante der Verladeklappe 1 ist eine seitliche Außenkante 13 oder die hintere Außenkante 14 der Verladeklappe 1.

Das Brückenstück 20 kann bei dieser Ausführungsform alternativ über das steckbare Verbindungsmittel 22 fest mit der Verladeklappe 1 verbindbar ausgeführt sein.

Vorteilhaft weist ein Brückenstück 20 insbesondere bei dieser Ausführungsform an der Verbindungsseite eine Nut 26 auf, mit der es auf die Außenkante 13, 14 der Verladeklappe 1 geschoben wird. Vorteilhaft sind Befestigungsmittel 23 wie Schrauben, Bolzen, Klammern oder dergleichen vorgesehen, um die Verbindung des Brückenstücks 20 mit der Verladeklappe 1 temporär zu sichern oder auch um das Brückenstück 20 dauerhaft an der Verladeklappe 1 zu befestigen, beispielsweise um bestehende Verladeklappen 1 nachzurüsten.

Vorteilhaft weist die Nut 26 eine Breite von maximal 2,5 cm, vorzugsweise 1,8 cm bis 2,2 cm auf, damit das Brückenstück 20 auf die gängigsten Verladeklappen 1 passt. Ein formschlüssiger Übergang vom Brückenstück 20 auf die Außenkante 13, 14 der Verladeklappe 1 ist dabei nicht erforderlich, da die Sicherung des Brückenstücks 20 von oben erfolgt und die kurzzeitige vertikale Belastung beim Auftreten durch das Tier keine überlastenden Kraftkomponenten auf die Verbindung zwischen Verladeklappe 1 und Brückenstück 20 erzeugt.

In einer weiteren vorteilhaften Ausführungsform ist die Oberseite der Nut 26 des Brückenstücks 20 länger als die Unterseite, d.h. die Oberseite der Nut 26 greift weiter über die Außenkante 13, 14 der Verladeklappe 1 als die Unterseite darunter.

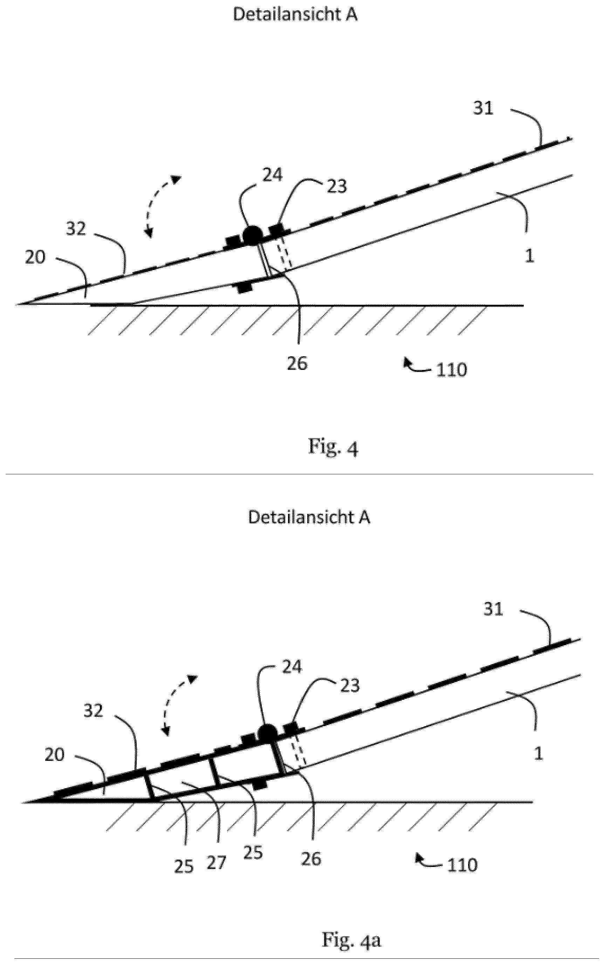

Fig. 4 zeigt beispielhaft die Detailansicht A einer schwenkbaren Verlängerungseinrichtung bzw. eines schwenkbaren Brückenstücks 20, 20' in der Seitenansicht. In dieser Ausführungsform ist wenigstens ein Brückenstück 20, 20' über ein schwenkbares Verbindungsmittel 24 wie beispielsweis ein mechanisches Scharnier, ein dauerelastisches Material wie Leder, Gummi oder dergleichen, beweglich an einer Außenkante der Verladeklappe angeordnet und kann bei Bedarf ein- und ausgeklappt werden. Die Außenkante der Verladeklappe ist vorzugsweise die hintere Außenkante 14 der Verladeklappe 1. In besonderen Fällen ist es auch von Vorteil, alternativ oder zusätzlich an den Seitenkanten 13 der Verladeklappe 1 bewegliche Brückenstücke 20' anzubringen, welche den Abstand k (vgl. Fig. 2a) zwischen der Verladeklappe 1 und dem Untergrund 110 formschlüssig überbrücken. Vorteilhaft sind Befestigungsmittel 23 wie Schrauben, Bolzen, Klammern oder dergleichen vorgesehen, um das Scharnier oder das dauerelastisches Material des Brückenstücks temporär oder dauerhaft an der Verladeklappe 1 zu befestigen, beispielsweise um bestehende Verladeklappen 1 mit derartigen Brückenstücken 20, 20' nachzurüsten.

Bei dieser Ausführungsform ist vorteilhafterweise die Oberseite des Brückenstücks 20, 20', mit der eine Nut 26 in die Verladeklappe greift, gleich tief wie die Unterseite und umfasst 1 cm bis 4 cm, vorzugsweise 2 cm bis 3 cm.

Durch schwenkbare Verbindungsmittel 24 kann das Brückenstück 20 bei hochgeklappter Verladeklappe 1 nach innen geklappt werden. Dadurch bleibt die hintere Öffnung des Tiertransportfahrzeuges 100 bei hochgeklappter Verladeklappe 1 in der oberen Position up in seiner Höhe unverändert und eine potentiell vorhandene Lüftungsöffnung bleibt unverändert erhalten.

Ein Brückenstück 20, 20' umfasst in den genannten Ausführungsbeispielen beispielsweise festes Material wie Holz oder Metall oder teilelastisches Material wie Kunststoff, faserverstärkten Kunststoff, Gummi oder Hartgummi. Das Brückenstück 20, 20' umfasst entweder Vollmaterial oder einen Profilkörper, vorzugsweise ein Strangpressprofil beispielsweise aus Leichtmetall oder um Material zu sparen dünnere Flächen als beim Vollmaterial oder Hohlräume, beispielsweise in Wabenform, welche an den Stellen, an denen hohe mechanische Belastungen auftreten, durch Rippen 25 verstärkt sind. Teilelastisches Material weist den Vorteil auf, dass sich ein Brückenstück 20, 20' im elastischen Bereich an Unebenheiten des Untergrunds 110 anpasst und dabei gleichzeitig die für eine wirksame Überbrückung erforderliche Festigkeit bereitstellt. Vorteilhaft ist auch eine Kombination in Form eines Verbunds von festem Material in Bereichen eines Brückenstücks 20, 20' mit besonders hoher Belastung oder mit besonderen Anforderungen an die Fertigungsgenauigkeit und elastischem oder teilelastischem Material in Bereichen eines Brückenstücks 20, 20' mit besonderen Anforderungen an eine möglichst formschlüssige Anpassung an den Untergrund 110.

Fig. 3a zeigt entsprechend beispielhaft die Detailansicht A einer aufsteckbaren Verlängerungseinrichtung bzw. eines aufsteckbaren Brückenstücks 20, 20' umfassend einen Profilkörper in der Seitenansicht.

Fig. 4a zeigt entsprechend beispielhaft die Detailansicht A einer schwenkbaren Verlängerungseinrichtung bzw. eines schwenkbaren Brückenstücks 20, 20' umfassend einen Profilkörper in der Seitenansicht.

In einer weiteren, nicht eigens in den Figuren dargestellten Ausführungsform ist das Brückenstück 20, 20' kürzer ausgeführt. Es umfasst eine Tiefe T (vgl. Fig. 3) von 20 cm bis 30 cm, vorzugsweise 25 cm bis 26 cm und ist wie die vorgenannten Ausführungsbeispiele an der Verladeklappe 1 anbringbar. In diesem Ausführungsbeispiel wird der Abstand s zum Untergrund 110 in einem deutlich steileren Winkel überbrückt als in den vorgenannten Ausführungsbeispielen.

Bedarfsweise kann optional in den genannten Ausführungsbeispielen ein nicht eigens in den Figuren dargestellter Adapter zwischen dem Brückenstück 20 und der Außenkante 13, 14 der Verladeklappe 1 angebracht werden, beispielsweise um einen Unterschied zwischen der Nut 26 des Brückenstücks 20 oder der Materialstärke des Brückenstücks 20 und der Materialstärke der Verladeklappe 1 auszugleichen.

Vorteilhaft weisen die Brückenstücke 20 an wenigstens einer Seite einen nicht eigens in den Figuren dargestellten elastischen Überstand oder eine elastische Lippe auf, um die Formschlüssigkeit zwischen der Verladeklappe 1 und dem Untergrund 110 und/oder zwischen den Einzelelementen eines mehrgliedrigen Brückenstücks 20' und/oder zwischen dem Brückenstück 20 und der Verladeklappe 1 weiter zu verbessern und dadurch zusätzliche Spalte zu überbrücken.

Fig. 5 zeigt beispielhaft die Draufsicht auf die Verladeklappe 1 aus der Detailansicht B mit mehreren Brückenstücken 20' oder mit einem Brückenstück 20 aus mehreren Einzelelementen 20', welche über Verbindungsmittel 22, 24 an der hinteren Außenkante 14 der Verladeklappe 1 angebracht sind.

Fig. 6 zeigt beispielhaft die Draufsicht auf die Verladeklappe 1 aus der Detailansicht B mit einem Brückenstück 20 an der hinteren Außenkante 14 der Verladeklappe 1 und mehreren Brückenstücken 20' an den seitlichen Außenkanten 13 der Verladeklappe 1.

In dieser vorteilhaften Ausführungsform ist ein Brückenstück 20; 20' über Verbindungsmittel 22, 24 entweder über ein schwenkbares Verbindungsmittel 24, umfassend beispielsweise ein mechanisches Scharnier, ein dauerelastisches Material wie Leder, Gummi oder dergleichen, beweglich an der Außenkante 13, 14 der Verladeklappe 1 angeordnet und kann bei Bedarf ein- und ausgeklappt werden. Alternativ umfasst das Verbindungsmittel 22, 24 zwischen dem Brückenstück 20., 20' und einer Außenkante 13, 14 der Verladeklappe 1 ein steckbares Verbindungsmittel 22. Im dargestellten Ausführungsbeispiel sind zusätzlich an den Seitenkanten 13 der Verladeklappe 1 bewegliche oder steckbare Brückenstücke 20' angebracht, welche den Abstand k (vgl. Fig. 2a) zwischen der Verladeklappe 1 und dem Untergrund 110 formschlüssig überbrücken.

### Liste der verwendeten Bezugszeichen

- 1: Verladeklappe
- 11: Bodenstütze
- 12: Schwenkeinrichtung für die Verladeklappe
- 13: seitliche Außenkante der Verladeklappe
- 14: hintere Außenkante der Verladeklappe
- s: Abstand der hinteren Außenkante zum Untergrund
- k: Abstand einer seitlichen Außenkante zum Untergrund
- 20, 20': Verlängerungseinrichtung, insbesondere Brückenstück
- 22: steckbares Verbindungsmittel
- 23: Befestigungsmittel
- 24: schwenkbares Verbindungsmittel
- 25: Rippe
- 26: Nut
- 27: Hohlraum
- 31: rutschfester Belag und/oder Profil der Verladeklappe
- 32: rutschfester Belag und/oder Profil des Brückenstücks
- 100: Tiertransportfahrzeug
- 110: Untergrund

## Patentansprüche

1. Verladeklappenvorrichtung für Tiertransportfahrzeuge zum Transport von Reit-, Last- oder Nutztieren, aufweisend eine Verladeklappe (1), die zwischen einer im Wesentlichen senkrechten Transportstellung und einer herabgeklappten Verladestellung verschwenkbar ausgebildet ist, wobei die Verladeklappe (1) in der herabgeklappten Verladestellung wenigstens an einer Stelle entlang einer die Verladeklappe (1) umlaufenden Außenkante (13, 14) einen Abstand zum Untergrund (110) aufweist, wobei wenigstens eine Verlängerungseinrichtung (20, 20') vorgesehen ist, welche über wenigstens ein Verbindungsmittel (22, 24) derart an der Verladeklappe (1) anordenbar ist, dass die Verlängerungseinrichtung (20, 20') in der herabgeklappten Verladestellung der Verladeklappe (1) den Raum zwischen der Verladeklappe (1) und dem Untergrund (110) an wenigstens einer Stelle überbrückt, **dadurch gekennzeichnet, dass** die Verlängerungseinrichtung (20, 20'), die mehrere Brückenstücke oder ein Brückenstück aus mehreren Einzelelementen umfasst, über Verbindungsmittel (22, 24) an der hinteren Außenkante (14) der Verladeklappe (1) anbringbar ist.

2. Verladeklappenvorrichtung gemäß Anspruch 1, wobei die Verlängerungseinrichtung (20, 20') ein Brückenstück aus einem festen Material wie beispielsweise Holz oder Metall oder aus einem teilelastischen Material wie Kunststoff, faserverstärkten Kunststoff, Gummi oder Hartgummi umfasst.

3. Verladeklappenvorrichtung gemäß Anspruch 2, wobei das Brückenstück (20, 20') einen Profilkörper oder wenigstens einen Hohlraum (27) und/oder Rippen (25) umfasst.

4. Verladeklappenvorrichtung gemäß einem der vorhergegangenen Ansprüche, wobei die Oberseite des Brückenstücks (20, 20') ein raues Profil und/oder einen rutschfesten Belag (32) aufweist.

5. Verladeklappenanordnung gemäß einem der vorhergegangenen Ansprüche, wobei ein Verbindungsmittel (22, 24) eine Nut (26) zur Aufnahme einer Außenkante (13, 14) der Verladeklappe (1) aufweist.

6. Verladeklappenvorrichtung gemäß Anspruch 5, wobei die Nut (26) eine definierte Breite, insbesondere eine Breite zwischen 1 cm bis 4 cm, vorzugsweise zwischen 2 cm bis 3 cm, aufweist.

7. Verladeklappenvorrichtung gemäß einem der vorhergegangenen Ansprüche, wobei zwischen der Nut (26) eines Brückenstücks (20, 20') und der Verladeklappe (1) ein Adapter zur Anpassung der Nut (26) an die Stärke der Außenkante (13, 14) der Verladeklappe (1) vorgesehen ist.

8. Verladeklappenvorrichtung gemäß einem der vorhergegangenen Ansprüche, wobei einem Verbindungselement (22, 24) ein Brückenstück (20, 20') zugeordnet ist.

9. Verladeklappenvorrichtung gemäß einem der vorhergegangenen Ansprüche, wobei ein Verbindungselement (22) steckbar ausgeführt ist.

10. Verladeklappenvorrichtung gemäß einem der vorhergegangenen Ansprüche, wobei ein Verbindungselement (24) beweglich ausgeführt ist.

11. Verladeklappenvorrichtung gemäß einem der vorhergegangenen Ansprüche, wobei ein Verbindungselement (22, 24) durch Befestigungsmittel (23) temporär oder dauerhaft an der Verladeklappe (1) befestigbar ist.

12. Verladeklappenvorrichtung gemäß einem der vorhergegangenen Ansprüche, wobei wenigstens ein Brückenstück (20, 20') an wenigstens einer seitlichen Außenkante (13) der Verladeklappe (1) anbringbar ist.

13. Verladeklappenvorrichtung gemäß einem der vorhergegangenen Ansprüche, wobei die Brückenstücke (20) an wenigstens einer Seite einen elastischen Überstand oder eine elastische Lippe aufweisen zur Verbesserung der Formschlüssigkeit zwischen der Verladeklappe (1) und dem Untergrund (110) und/oder zwischen den Einzelelementen eines mehrgliedrigen Brückenstücks (20') und/oder zwischen dem Brückenstück (20) und der Verladeklappe (1) und dadurch zur Überbrückung von zusätzlichen Spalten.

## Claims

1. Loading flap device for animal transport vehicles for the transport of riding, pack or farm animals, comprising a loading flap (1) which is pivotably provided between a substantially vertical transport position and a folded-down loading position, wherein in the folded-down loading position the loading flap (1) is at a distance from the ground (110) at least at one point along an outer edge (13, 14) surrounding the loading flap (1), wherein at least one extension device (20, 20') is provided, which can be arranged on the loading flap (1) via at least one connecting means (22, 24) in such a way that, in the folded-down loading position of the loading flap (1), the extension device (20, 20') bridges the space between the loading flap (1) and the ground (110) at at least one point, **characterized in that** the extension device (20, 20'), which comprises a plurality of bridge sections or a bridge section comprising a plurality of individual elements, is attachable to the rear outer edge (14) of the loading flap (1) via connecting means (22, 24).

2. Loading flap device according to claim 1, wherein the extension device (20, 20') comprises a bridge section of a solid material such as wood or metal or of a partially elastic material such as plastic, fibre-reinforced plastic, rubber or hard rubber.

3. Loading flap device according to claim 2, wherein the bridge section (20, 20') comprises a profile body or at least one cavity (27) and/or ribs (25).

4. Loading flap device according to one of the preceding claims, wherein the upper side of the bridge sections (20, 20') has a rough profile and/or a non-slip covering (32).

5. Loading flap device according to any of the foregoing claims, wherein a connecting means (22, 24) has a groove (26) for receiving an outer edge (13, 14) of the loading flap (1).

6. Loading flap device according to claim 5, wherein the groove (26) has a defined width, in particular a width between 1 cm to 4 cm, preferably between 2 cm to 3 cm.

7. Loading flap device according to one of the preceding claims, an adapter is provided between the groove (26) of a bridge section (20, 20') and the loading flap (1) for adapting the groove (26) to the thickness of the outer edge (13, 14) of the loading flap (1).

8. Loading flap device according to one of the preceding claims, wherein a bridge section (20, 20') is associated with a connecting element (22, 24).

9. Loading flap device according to one of the preceding claims, wherein a connecting element (22) is provided pluggable.

10. Loading flap device according to any of the foregoing claims, wherein a connecting element (24) is provided movable.

11. Loading flap device according to one of the preceding claims, wherein a connecting element (22, 24) is temporarily or permanently attachable to the loading flap (1) by fastening means (23).

12. Loading flap device according to one of the preceding claims, wherein at least one bridge section (20, 20') is attachable to at least one lateral outer edge (13) of the loading flap (1).

13. Loading flap device according to one of the preceding claims, wherein the bridge sections (20) have an elastic projection or an elastic lip on at least one side to improve the positive fit between the loading flap (1) and the ground (110) and/or between the individual elements of a multi-membered bridge section (20') and/or between the bridge section (20) and the loading flap (1) and thereby for bridging additional gaps.

## Revendications

1. Dispositif de trappe de chargement pour véhicules de transport d'animaux pour transporter des animaux de monte, de charge ou de ferme, comprenant une trappe de chargement (1) qui est réalisée pour pouvoir pivoter entre une position de transport sensiblement verticale et une position de chargement rabattue,
dans lequel
au moins à un emplacement le long d'un bord extérieur (13, 14) entourant la trappe de chargement (1), la trappe de chargement (1) dans la position de chargement rabattue présente une distance par rapport au sol (110),
il est prévu au moins un moyen de prolongement (20, 20') qui peut être disposé contre la trappe de chargement (1) par l'intermédiaire d'au moins un moyen de liaison (22, 24) de telle sorte que le moyen de prolongement (20, 20'), dans la position de chargement rabattue de la trappe de chargement (1), comble l'espace entre la trappe de chargement (1) et le sol (110) à au moins un emplacement,
**caractérisé en ce que**
le moyen de prolongement (20, 20') comprenant plusieurs organes formant pont ou un organe formant pont constitué de plusieurs éléments individuels peut être monté au bord extérieur arrière (14) de la trappe de chargement (1) par l'intermédiaire de moyens de liaison (22, 24).

2. Dispositif de trappe de chargement selon la revendication 1,
dans lequel
le moyen de prolongement (20, 20') comprend un organe formant pont en un matériau solide tel que le bois ou le métal ou en un matériau partiellement élastique tel que la matière plastique, la matière plastique renforcée de fibres, le caoutchouc ou le caoutchouc dur.

3. Dispositif de trappe de chargement selon la revendication 2,
dans lequel
l'organe formant pont (20, 20') comprend un corps profilé ou au moins une cavité (27) et/ou des nervures (25).

4. Dispositif de trappe de chargement selon l'une des revendications précédentes,
dans lequel
la face supérieure de l'organe formant pont (20, 20') présente un profil rugueux et/ou un revêtement antidérapant (32).

5. Dispositif de trappe de chargement selon l'une des revendications précédentes,
dans lequel
un moyen de liaison (22, 24) présente une rainure (26) pour recevoir un bord extérieur (13, 14) de la trappe de chargement (1).

6. Dispositif de trappe de chargement selon la revendication 5,
dans lequel
la rainure (26) présente une largeur définie, en particulier une largeur comprise entre 1 cm et 4 cm, de préférence entre 2 cm et 3 cm.

7. Dispositif de trappe de chargement selon l'une des revendications précédentes,
dans lequel
un adaptateur est prévu entre la rainure (26) d'un organe formant pont (20, 20') et la trappe de chargement (1) pour adapter la rainure (26) à l'épaisseur du bord extérieur (13, 14) de la trappe de chargement (1).

8. Dispositif de trappe de chargement selon l'une des revendications précédentes,
dans lequel
un organe formant pont (20, 20') est associé à un élément de liaison (22, 24).

9. Dispositif de trappe de chargement selon l'une des revendications précédentes,
dans lequel
un élément de liaison (22) est réalisé de façon enfichable.

10. Dispositif de trappe de chargement selon l'une des revendications précédentes,
dans lequel
un élément de liaison (24) est réalisé de façon mobile.

11. Dispositif de trappe de chargement selon l'une des revendications précédentes,
dans lequel
un élément de liaison (22, 24) peut être fixé temporairement ou durablement à la trappe de chargement (1) par des moyens de fixation (23).

12. Dispositif de trappe de chargement selon l'une des revendications précédentes,
dans lequel
au moins un organe formant pont (20, 20') peut être monté à au moins un bord extérieur latéral (13) de la trappe de chargement (1).

13. Dispositif de trappe de chargement selon l'une des revendications précédentes,
dans lequel
les organes formant pont (20) présentent sur au moins un côté un dépassement élastique ou une lèvre élastique en vue d'améliorer la coopération de forme entre la trappe de chargement (1) et le sol (110) et/ou entre les éléments individuels d'un organe formant pont (20') en plusieurs pièces et/ou entre l'organe formant pont (20) et la trappe de chargement (1) et ainsi en vue de combler des interstices supplémentaires.
